# FASCICULE DE BREVET EUROPEEN

(11) **EP 0 431 212 B1**
(45) Date de publication et mention de la délivrance du brevet: **18.08.1993**
(21) Numéro de dépôt: 89122673.0
(22) Date de dépôt: 08.12.1989
(51) Int. Cl.: C05F 17/02, C05F 17/00

(54) **Procédé de pasteurisation/cuisson des déchets de matières organiques diverses en vue de compostage**
Verfahren zum Pasteurisieren/Kochen von verschiedenen Sorten organischer Abfälle zum Zweck von Kompostierung
Process for pasteurizing/cooking of different kinds of organic waste with a view to composting

(43) Date de publication de la demande: 12.06.1991
(73) Titulaire: Cotton, Armand, CH-1253 Crête-Vandoeuvres Genève (CH)
(72) Inventeur: Cotton, Armand, CH-1253 Crête-Vandoeuvres Genève (CH)

(56) Documents cités:
- EP-A- 0 028 194
- EP-A- 0 142 473
- CH-A- 195 665
- DE-A- 2 426 536
- DE-B- 2 319 081
- FR-A- 898 669
- US-A- 1 832 179

## Description

La présente invention concerne une enceinte pour la pasteurisation/cuisson des déchets de matières organiques, tels que déchets de jardins, résidus de récoltes, déchets de cuisines, boues d'épuration des eaux, broyage de bois, etc. dans le but de les composter.

Le compost se fait généralement sans cette pasteurisation/cuisson initiale. Les déchets sont disposés en tas nommés andains, qui sont retournés plusieurs fois pour les oxygéner afin que l'ensemble de ceux-ci une fois ou l'autre, se trouve au centre du tas où il fait chaud.

Ces opérations se font avec des chargeurs ou des machines spécialisées qui arrosent en même temps que le retournement.

Le travail avec ces machines nécessite de créer, sous les andains, un sol carrossable muni d'écoulements appropriés et un bassin de filtration des eaux.

L'invention a pour but une simplification importante du travail de compostage, notamment :
a) de supprimer tous les retournements des andains qui sont pratiqués avec des chargeurs mobiles ou des machines spécialisées qui arrosent et broient en même temps qu'elles retournent. Ces machines sont dévoreuses d'énergie; de plus, elles sont coûteuses à l'entretien parce que très sollicitées par le broyage.
   Ces retournements se font en moyenne 5 fois.
   Avec la présente invention, le seul travail à faire à la fin de la pasteurisation/cuisson est une vidange des déchets solides de l'enceinte qui peut se faire avec un simple tracteur équipé d'une fourche frontale.
b) du supprimer le sol carrossable nécessaire pour le travail des machines au moment des retournements; de supprimer les écoulements des eaux d'arrosage et des eaux de pluie qui lessivent les tas et de supprimer le bassin de filtration de ces dites eaux.
c) de réduire la surface de compostage. En effet, après la pasteurisation/cuisson, le volume de déchets de matières organiques est réduit d'un tiers. De ce fait, la surface de compostage est réduite d'autant. Ceci est aussi très important car le terrain est très coûteux. Par ailleurs, il n'est pas aisé de trouver une surface importante aux alentours des agglomérations.

Le but de l'invention est atteint par le fait que ces déchets, qui peuvent être des déchets de jardins, résidus de récoltes, déchets de cuisines, boues d'épuration des eaux, broyat de bois, sont placés dans une enceinte (1) isolée, qu'ils y sont noyés de liquide par l'intermédiaire du tuyau, (2) et de la pompe (8) avant que cette enceinte (1) ne soit fermée par le couvercle, qu'on vide ensuite ce liquide par l'intermédiaire de la vanne (15), qu'on injecte de l'air en sa partie inférieure au moyen du ventilateur (5) pour chasser l'air saturé de gaz carbonique enfermé dans la masse végétale et pour provoquer une importante réaction exothermique permettant d'obtenir une température élevée de 70 degrés Celsius, voire plus durant une période de 10 à 20 jours.

De préférence, ce procédé est réalisé dans l'installation connue du document EP-A-142473, qui comporte une enceinte caractérisée en ce que dans son sol, une série de rainures (3) de profondeur et largeur idoines y sont aménagées, afin de permettre la circulation de l'air à introduire sous les déchets de matières organiques. Ces rainures (3) sont reliées à un tuyau collecteur (4) vanne (15) ouverte de pénétration dans l'enceinte (1) qui est raccordé au ventilateur (5).

L'enceinte connue de ce document est ultérieurement caractérisée en ce que les rainures (3) servent également à l'écoulement des liquides excédentaires qui s'écouleront par décantation dans la citerne enterrée (6) servant de stockage des liquides; en ce que le tuyau collecteur (4) d'écoulement de ces eaux excédentaires comprend, lors de sa pénétration dans la citerne enterrée (6), un siphon (7) dont la hauteur est supérieure à la pression du ventilateur (5), en ce que les liquides excédentaires, stockés dans la citerne enterrée (6), serviront à l'immersion des déchets de matières organiques comme mentionné dans la revendication 1, en ce qu'ils seront pompés au moyen de la pompe (8) immergée dans la citerne enterrée (6); en ce qu'une alimentation d'eau (9) est installée car le système consomme un peu d'eau qui s'échappe par évaporation lors de la pasteurisation/cuisson, et en ce qu'en fonctionnement normal, la vanne (14) est ouverte, la vanne (16) fermée, et en ouvrant la vanne (16) et fermant la vanne (14), on a la possibilité de vidanger la fosse (6) au moyen de la pompe (8).

L'enceinte connue de ce document est encore caractérisée en ce qu un élément vertical (10) est amovible pour permettre aisément la vidange de l'enceinte (1); en ce que l'étanchéité entre l'enceinte (1) et l'élément amovible (10) est réalisé par un joint (13) en matière appropriée; en ce que l'élément vertical (10) est construit en matériaux légers; en ce que l'élément vertical (10) est tenu en place contre l'enceinte (1) par un jeu d'écrous de fixation judicieusement placés.

L'enceinte connue de ce document est encore caractérisée en ce qu'elle est fermée en sa partie supérieure par un élément amovible horizontal (11) posé sur l'enceinte (1); en ce que l'étanchéité entre l'élément amovible horizontal (11) et l'enceinte (1) est réalisée par un joint (12) en matière appropriée; en ce que l'élément amovible horizontal (11) est construit en matériaux légers.

L'enceinte connue de ce document est finalement caractérisée en ce que cette enceinte (1) fermée par l'élément vertical (10) et l'élément horizontal (11) est bien isolée extérieurement pour éviter toute déperdition thermique défavorable à une bonne pasteurisation/cuisson.

Le couple enceinte (1) et citerne enterrée (6) raccordé au moyen de la tuyauterie (4) et dont l'eau est véhiculée par la pompe (8) représente un ensemble fermé. De cet ensemble, aucun liquide ne sort et ne s'écoule sur le sol. Ce fait est important en regard des précautions qu'il est nécessaire de prendre vis-à-vis de la nappe phréatique.

L'exploitation du procédé est globalement très économique. Le substrat dans son enceinte est statique durant toute sa phase de pasteurisation/cuisson. Seul le ventilateur (5) tourne, mais sa puissance est faible.

Selon une réalisation de l'invention (2 enceintes de 5 m3 chacune) et son exploitation, on constate qu'aucune mauvaise odeur n est perceptible sur le site. Ceci est particulièrement manifeste quand on traite des déchets de cuisines, facilement putrescibles. Même à l'intérieur de l'enceinte (1), lorsque l'on enlève l'élément horizontal (11) pour examen, l'odeur légère qu'on détecte est celle d'une cuisson de feuilles : elle se rapproche de l'odeur de la forêt.

En ce qui concerne le traitement des boues d'épuration des eaux dont l'odeur est pénétrante, cette odeur est très réduite après mélange avec d'autrs déchets et pasteurisation/cuisson. On le constate particulièrement lors de la vidange de l'enceinte (1). Elle est insignifiante après la mise en tas.

L'obtention d'une haute température dans la totalité de la masse végétale et le fait que cette masse ne présente pas d'odeur désagréable est le résultat d'un processus biologique adéquat.

C'est une garantie de succès qui libère l'exploitation de toute inquiétude et de toute surveillance.

Pour l'exploitation de l'invention, il est conseillé d'installer deux enceintes (1) côte à côte. Au vu de l'expérience, la phase de pasteurisation/cuisson d'une durée de 2 semaines environ est adéquate. En remplissant une semaine une enceinte et la semaine suivante l'autre enceinte, on acquiert une certaine continuité dans le travail d'exploitation. En fait, il est utile de traiter les déchets de matières organiques frais, sinon ils commencent à se putréfier et dégagent de mauvaises odeurs.

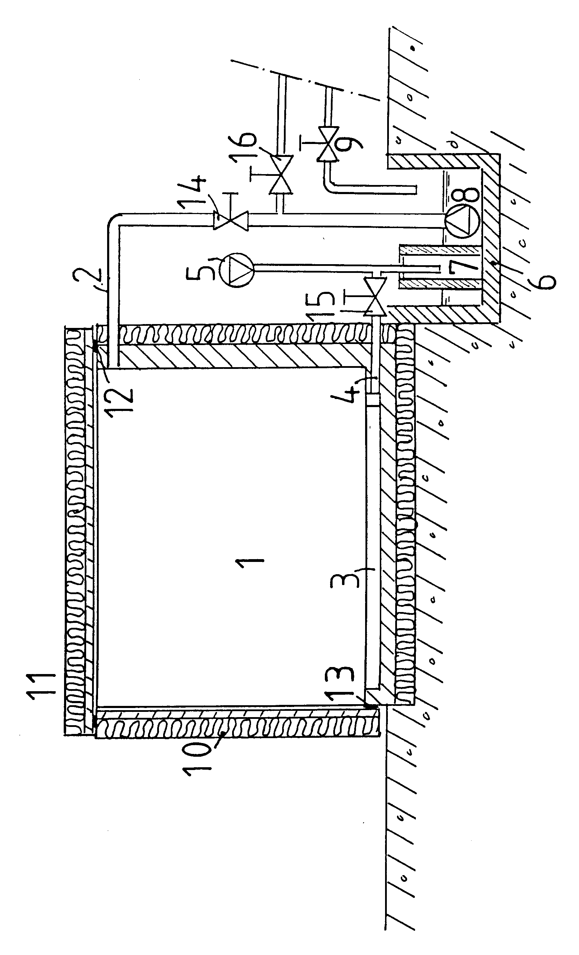

## Revendications

1. **Procédé de pasteurisation/cuisson des déchets de matières organiques diverses en vue de compostage,** déchets tels que déchets de jardins, résidus de récoltes, déchets de cuisines, boues d'épuration des eaux, broyat de bois, dans le but de les composter, caractérisé en ce que ces déchets sont placés dans une enceinte (1) isolée, qu'ils y sont noyés de liquide par l'intermédiaire du tuyau (2) et de la pompe (8) avant que cette enceinte (1) ne soit fermée par le couvercle, qu'on vide ensuite ce liquide par l'intermédiaire de la vanne (4), qu'on injecte de l'air en sa partie inférieure au moyen du ventilateur (5) pour chasser l'air saturé de gaz carbonique enfermé dans la masse végétale et pour provoquer une importante réaction exothermique permettant d'obtenir une température élevée de 70 degrés Celsius, voire plus, durant une période de 10 à 20 jours.

2. **Procédé de pasteurisation/cuisson** suivant la revendication 1, caractérisé en ce que une série de rainures (3) de profondeur et largeur idoines sont aménagées dans le sol de l'enceinte, afin de permettre la circulation de l'air à introduire sous les déchets de matières organiques, et en ce que ces rainures (3) sont reliées à un tuyau collecteur (4) vanne (15) ouverte de pénétration dans l'enceinte (1) qui est raccordé au ventilateur (5).

3. **Procédé de pasteurisation/cuisson** suivant la revendication 1 et 2, caractérisé en ce que les rainures (3) décrites sous revendication 2 servent également à l'écoulement des liquides excédentaires qui s'écouleront par décantation dans la citerne enterrée (6) servant de stockage des liquides; en ce que le tuyau col lecteur (4) d'écoulement de ces eaux excédentaires comprend, lors de sa pénétration dans la citerne enterrée (6), un siphon (7) dont la hauteur est supérieure à la pression du ventilateur (5); en ce que les liquides excédentaires, stockés dans la citerne enterrée (6), serviront à l'immersion des déchets de matières organiques comme mentionné dans la revendication 1 et qu'ils seront pompés au moyen de la pompe (8) immergée dans la citerne enterrée (6); en ce qu'une alimentation d'eau (9) est installée car le système consomme un peu d'eau qui s'échappe par évaporation lors de la pasteurisation/cuisson et en ce que en fonctionnement normal, la vanne (14) est ouverte, la vanne (16) fermée et en ouvrant la vanne (16) et fermant la vanne (14), on a la possibilité de vidanger la fosse (6) au moyen de la pompe (8).

4. **Procédé de pasteurisation/cuisson** suivant la revendication 1, caractérisé en ce qu'un élément vertical (10) est amovible pour permettre aisément la vidange de l'enceinte (1); en ce que l'étanchéité entre l'enceinte (1) et l'élément amovible (10) est réalisé par un joint (13) en matière appropriée; en ce que l'élément vertical (10) est construit en matériaux légers; en ce que l'élément vertical (10) est tenu en place contre l'enceinte (1) par un jeu d'écrous de fixation judicieusement placés.

5. **Procédé de pasteurisation/cuisson** suivant la revendication 1, caractérisé en ce que l'enceinte (1) est fermée en sa partie supérieure par un élément amovible horizontal (11) posé sur l'enceinte (1); en ce que l'étanchéité entre l'élément amovible horizontal (11) et l'enceinte (1) est réalisée par un joint (12) en matière appropriée; en ce que l'élément amovible horizontal (11) est construit en matériaux légers.

6. **Procédé de pasteurisation/cuisson suivant** les revendications 1, 4, 5, caractérisé en ce que cette enceinte (1) fermée par l'élément vertical (10) et l'élément horizontal (11) est bien isolée extérieurement pour éviter toute déperdition thermique défavorable à une bonne pasteurisation/cuisson.

## Claims

1. **Method of pasteurization / cooking** of various organic wastes for composting (wastes such as market-garden residues, household refuse, sludge, wood cuttings with the aim of composting them), characterized by the fact that the wastes are placed in an isolated concrete container (1), they are flooded with liquid brought with a pump (8) through a pipe (2) before the container (1) is covered, then the liquid is emptied through the valve (4), air is injected at the bottom of the container by a ventilator (5) to evacuate the air saturated by carbonic gas contained in the vegetable mass and to initiate an important exothermic reaction which permits to reach the temperature of 70° Celsius or even more for a period of time between 10 and 20 days.

2. **Method of pasteurization / cooking** described under claim 1 characterized by the fact that a series of grooves (3) of adequate depth and width are made at the bottom of the container so that the air injected under the mass of organic wastes can circulate, the fact that the grooves (3) are connected to a collecting pipe (4) the valve (15) of which is open to allow the penetration of air in the container (1) and which is connected to the ventilator (5).

3. **Method of pasteurization / cooking** described under claim 1 and 2 charaterized by the fact that the grooves (3) described under claim 2 also allow the excess fluids to flow by decantation into the buried pit (6) stocking the liquids, the fact that the pipe (4) collecting the excess fluids, where entering the buried pit (6) is fitted with a U-bend (7) whose height is superior to the pressure of the ventilator (5), the fact that the excess liquids stocked in the buried pit (6) will be used to flood the organic mass as mentioned in claim 1, and that they will be pumped up by the pump (8) immerged in the buried pit (6), the fact that a source of water (9) is installed because the system uses some water through evaporation during the pasteurization / cooking phase, the fact that under normal conditions the valve (14) is open, the valve (16) shut, and by opening the valve (16) and shutting the valve (14) the pit (6) can be emptied by the pump (8).

4. **Method of pasteurization / cooking** as described under claim 1 characterized by the fact that a vertical element (10) can be removed to allow an easy emptying of the container (1), the fact that the tight fitting of the container (1) and the vertical removable element (10) is ensured by a seal (13) of an appropriate material, the fact that the vertical element (10) is made of light material, the fact that the vertical element (10) is fixed against the container (1) by a series of bolts at appropriate places.

5. **Method of pasteurization / cooking** as described under claim 1 characterized by the fact that the container (1) is covered at the top by a removable element placed horizontally (11) on the container (1), the fact that the tight fitting of the removable element placed horizontally (11) and of the container (1) is ensured by a seal (12) of an appropriate material, the fact that the removable element placed horizontally (11) is built of light material.

6. **Method of pasteurization / cooking** as described under claims 1, 4, 5 characterized by the fact that the container (1), when closed by the vertical element (10) and the horizontal element (11), is fully insulated on the outside to prevent a loss of heat which would not be favourable for a good pasteurization / cooking.

## Patentansprüche

1. Verfahren zum Erzeugen von Kompost mit Pasteurisierung/Kochen der verschiedenen organischen Materien, Abfälle wie Gartenabfälle, Landwirtschaftsabfälle, Küchenabfälle, Kläranlagschlämme, Holzschnitte, um sie zu kompostieren, charakterisiert in dem man die Abfälle in einen isolierten Umfang (1) stellt, wobei man die gärende organische Materie anhand eines Rohrs (2) und einer Pumpe (8) mit Flüssigkeit überschwemmt, bevor man diesen Umfang (1) mit dem Deckel verschliesst, dass man nachher die Flüssigkeit mit der Schütze (4) entfernt, dass man in seinem niedrigen Teil mit dem Ventilator (5) Luft einspritzt um die, in der organischen Masse eingesperrte mit Kohlensäure übersättigte Luft zu entfernen, und um eine wichtige, exothermische Reaktion hervorzurufen, eine hohe Temperatur von 70 Grad Celsius zu erreichen, ev. sogar mehr, während einer Periode von 10 bis 20 Tagen.

2. Verfahren von Pasteurisierung/Kochen laut Anspruch 1, charakterisiert in dem eine, mit tauglicher Tiefe und Breite im Boden des Umfangs eingerichtete Serie von Einschnitten (3) installiert werden, damit man der Luft, die unter den organischen Materien eingeführt wird, den Kreislauf erlaubt, und diese Einschnitte (3) an einem, mit dem Ventilator (5) verbundenen Einsammlerschlauch (4) offene Schütze (15) Zutritt in den Umfang (1) zusammenpassen.

3. Verfahren von Pasteurisierung/Kochen laut Ansprüche 1 und 2, charakterisiert in dem die, unter Anspruch 2 beschriebenen Einschnitte (3), auch für den Ausfluss der überschreitenden Flüssigkeiten durch Abklärung in die eingegrabene Lagergrube (6) dienen; in dem der Auslaufseinsammlerschlauch (4) von diesen überschüssigen Wässern beim Eingang in die eingegrabene Grube (6) einen Siphon (7) enthält dessen Höhe höher als der Hochdruck des Ventilators (5) ist; in dem die überflüssigen, in der eingegrabenen Grube (6) gelagerten Flüssigkeiten der Bewässerung der organischen Abfälle dienen, wie im Anspruch 1) erwähnt und sie mit der in der eingegrabenen Grube (6) eingetauchten Pumpe ( 8) herausgepumpt werden; in dem eine Wasserzuführung (9) installiert wird, da die Einrichtung ein wenig Wasser braucht, Wasser das durch Verdunstung bei der Pasteurisierung/Kochen entweicht und das bei normalem Betrieb die Schütze (14) offen ist, die Schütze (16) geschlossen, und beim öffnen der Schütze (16) und schliessen der Schütze (14) man die Gelegenheit hat mit der Pumpe (8) die Grube (6) auszuleeren.

4. Verfahren von Pasteurisierung/Kochen laut Anspruch 1, charakterisiert in dem ein senkrechtes Element (10) absetzbar ist um das Ausleeren des Umfangs (1) einfach zu gestatten ; in dem die Wasserdichtheit zwischen dem Umfang (1) und dem absetzbaren Element (10) mit einer Fuge aus passendem Material ausgeführt wird; in dem das senkrechte Element (10) mit leichten Materien gebaut wird; in dem das senkrechte Element (10) mit sinnvoll gesetzten Schrauben befestigt wird.

5. Verfahren von Pasteurisierung/Kochen laut Anspruch 1, charakterisiert in dem der Umfang (1) in seinem oberen Teil mit einem mobilen, auf den Umfang (1) gelegten, horizontalen Element (11) geschlossen ist; in dem die Wasserdichtheit zwischen dem mobilen, horizontalen Element (11) und dem Umfang (1) mit einer Fuge (12) aus passendem Material ausgeführt wird; in dem das mobile, horizontale Element (11) aus leichten Materialen ausgeführt wird.

6. Verfahren von Pasteurisierung/Kochen laut Ansprüche 1, 4, 5, charakterisiert in dem dieser mit dem senkrechten Element (10) und dem horizontalen Element (11) geschlossene Umfang (1) aussen gut isoliert ist um jeden, einer guten Pasteurisierung/Kochen nachteiligen, thermischen Verlust vermeiden.
